(19) Europäisches Patentamt
European Patent Office
Office européen des brevets

(11) **EP 2 549 634 A1**

(12) **EUROPEAN PATENT APPLICATION**
published in accordance with Art. 153(4) EPC

(43) Date of publication:
**23.01.2013 Bulletin 2013/04**

(51) Int Cl.:
***H02M 1/08*** *(2006.01)*

(21) Application number: **11756006.0**

(22) Date of filing: **09.02.2011**

(86) International application number:
**PCT/JP2011/052771**

(87) International publication number:
**WO 2011/114816 (22.09.2011 Gazette 2011/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2010 JP 2010056903**

(71) Applicant: **Hitachi, Ltd.**
**Chiyoda-ku**
**Tokyo 100-8280 (JP)**

(72) Inventors:
• **NARUSHIMA, Jun**
**Hitachi-shi**
**Ibaraki 319-1292 (JP)**

• **KATOH, Shuji**
**Hitachi-shi**
**Ibaraki 319-1292 (JP)**
• **KATO, Tetsuya**
**Hitachi-shi**
**Ibaraki 319-1293 (JP)**
• **INOUE, Shigenori**
**Hitachi-shi**
**Ibaraki 319-1292 (JP)**

(74) Representative: **Strehl Schübel-Hopf & Partner**
**Maximilianstrasse 54**
**80538 München (DE)**

(54) **ELECTRIC POWER CONVERSION APPARATUS**

(57) When an electric power conversion apparatus formed by connecting a plurality of cells each using a semiconductor switching element in a cascade manner is controlled, it is necessary to communicate between the cells and a central controller. However, an increase in the number of cells increases the amount of information to be communicated and the load imposed on information processing. An object of the present invention is to reduce the amount of information communicated between the cells and the central controller. The electric power conversion apparatus according to the present invention includes a plurality of arms that are formed by connecting the cells in a cascade manner and has a function of feeding electrical power to a cell controller from a main circuit. The cell controller is included in each of the cells to communicate with the central controller. The electric power conversion apparatus according to the present invention uses the main circuit to supply electrical power for the cell controller in each cell. Therefore, when a main component of a cell is faulty, the central controller cannot communicate with the cell controller in the affected cell. Consequently, the central controller can recognize that the affected cell is faulty.

*FIG. 1*

**Description**

TECHNICAL FIELD

The present invention relates to an electric power conversion apparatus formed by connecting a plurality of unitary converters in a cascade manner, particularly relates to a technology for detecting an abnormality in the unitary converters.

BACKGROUND ART

A modular multilevel converter (MMC) and a cascade multilevel converter (CMC) are circuit systems which use an on-off controllable switching element such as an insulated gate bipolar transistor (IGBT) and can output a voltage higher than a withstanding voltage of the switching element. It can be expected that these circuit systems are applied, for instance, to a high voltage direct current (HVDC) transmission system, a reactive power compensator (STATCOM), and a motor drive inverter.

The MMC circuit system is disclosed in Non-Patent Publication 1 listed in a prior art document later.

According to Non-Patent Publication 1, the MMC is formed by connecting a plurality of unitary converters (hereinafter referred to as cells) in series (in a cascade manner). Each cell is, for example, a bidirectional chopper circuit and includes a switching element and a DC capacitor. Each cell is connected to the outside through at least two terminals and capable of regulating the voltage between the two terminals to a voltage of its DC capacitor or to zero.

When each cell is PWM-controlled, the output voltage waveform of the MMC can be changed to a multi-level waveform by appropriately shifting the phase of a triangular wave carrier to be given to each cell. This makes it possible to reduce harmonic components more than a two-level converter.

The MMC is characterized by the fact that each cell has a cell controller for the self. The cell controller has a function capable of communicating with a central controller that controls all cells.

PRIOR ART LITERATURE

NON-PATENT PUBLICATION

Non-Patent Publication 1: Makoto Hagiwara and Hirofumi Akagi, "PWM Control and Experiment of Modular Multilevel Converters, " IEEJ Transactions on Industry Applications, Vol. 128, No. 7, pp. 957-965

SUMMARY OF THE INVENTION

PROBLEM TO BE SOLVED BY THE INVENTION

When the MMC is controlled as described earlier, it is necessary to establish communication between the cells and the central controller. The more the number of cells increases, the more the amount of information to be communicated and the load imposed on information processing increase. If necessary computation is not completed within a computation cycle due to the increase in the communication information amount and information processing load, normal control cannot be performed.

Consequently, it is desired to reduce the amount of information communicated between each cell and the central controller.

An object of the present invention is to reduce the amount of information communicated between each cell and the central controller, in the electric power conversion apparatus formed by connecting cells each having a semiconductor switching element to each other in a cascade manner.

MEANS FOR SOLVING THE PROBLEM

The above-mentioned object can be achieved by an electric power conversion apparatus that includes a plurality of arms each which is formed by connecting a plurality of cells to each other in a cascade manner and has a function of feeding electrical power from a main circuit of the apparatus to a cell controller communicating with a central controller.

In order to achieve the above-mentioned object, one aspect of the present invention is characterized by providing with a self-power supply configured to feed each of the cells with electrical power from each cell's own main circuit, in the electric power conversion apparatus having a plurality of cells connected to each other in a cascade manner.

Optionally, in the electric power conversion apparatus of the present invention, the apparatus may be characterized by including a central controller and cell controllers each which controls each of the cells, wherein each of cell controllers may be configured to be fed with electrical power from the self-power supply.

Optionally, in the electric power conversion apparatus of the present invention, the apparatus may be characterized by each cell including the followingmain circuit, DC voltage sensor, and gate driver. The main circuit is configured by a switching element and a DC capacitor. The DC voltage sensor is to detect a voltage of the DC capacitor. The gate driver is to receive a signal from the central controller, receive a gate pulse from each cell controller that generates the gate pulse for the switching element to turn on and off the switching element. Furthermore, the self-power supply may be configured to feed electrical power to each of the cell controllers and the gate driver.

Optionally, in the electric power conversion apparatus of the present invention, the central controller and cell controllers may be connected to each other through optical fiber cables in a daisy chain connection.

Optionally, in the electric power conversion apparatus of the present invention, the central controller and cell controllers may be connected to each other through optical fiber cables in star connection.

Optionally, in the electric power conversion apparatus of the present invention, the main circuit in each of the cells may include a switching element and a DC capacitor, wherein the central controller and each cell controller communicate to each other by using a signal for judging whether a failure occurs in the DC capacitor or in the switching element of each of the cells.

Optionally, in the electric power conversion apparatus of the present invention, the central control may be configured to judge that the DC capacitor or switching element in the associated cell is faulty on condition that the central controller is unable to communicate with any of the cell controllers.

Optionally, in the electric power conversion apparatus of the present invention, the self-power supply may feed the electrical power from the DC capacitor.

Optionally, in the electric power conversion apparatus of the present invention, the self-power supply may feed the electrical power by using a voltage applied to the switching element.

Optionally, in the electric power conversion apparatus of the present invention, the self-power supply may include a series capacitor circuit, which is formed by a plurality of voltage-dividing feed capacitors, and voltage adjustable circuits for adjusting the voltages of the voltage-dividing feed capacitors respectively, wherein outputs of the voltage adjustable circuits are connected to each other in parallel.

Optionally, in the electric power conversion apparatus of the present invention, each of the voltage adjustable circuits may have a function of detecting a voltage of each of the voltage-dividing feed capacitors to adjust the output of each voltage adjustable circuit.

Optionally, in the electric power conversion apparatus of the present invention, the self-power supply may include a feed capacitor for charging electrical power, a discharge prevention diode for preventing a discharge of the feed capacitor, a limiting resistor for limiting an electrical current flowing into the self-power supply from the main circuit, a voltage limiter for maintaining the voltage of the feed capacitor constant, and a voltage adjustable circuit for adjusting the voltage of the feed capacitor.

Optionally, in the electric power conversion apparatus of the present invention, the voltage adjustable circuit may include a plurality of output terminals with which a plurality of backup capacitors are connected in parallel, respectively, wherein the backup capacitors have discharge time constants different from each other.

Optionally, in the electric power conversion apparatus of the present invention, the output terminal of each of the cells is connected to a normally-on short circuiting switch, wherein driving electrical power for the short circuiting switch is fed from the self-power supply.

Optionally, in the electric power conversion apparatus of the present invention, the central controller may be configured to identify a faulty cell when any one of the cells is faulty, and transmit a signal to cells other than the faulty cell to balance the transmission delay time of communication between the cell controller of each cell and the central controller.

## ADVANTAGES OF THE INVENTION

The electric power conversion apparatus, which is formed by connecting a plurality of cells in a cascade manner, allows the main circuit to feed electrical power for the cell controller for each cell. Therefore, when a failure occurs in a main component of any of the cells, the central controller cannot communicate with the cell controller for the faulty cell. This enables the central controller to recognize the failure in the cell even if a failure bit is not provided for the main component of each cell.

Therefore, according to the present invention, in the electric power conversion apparatus that is formed by connecting the cells such as semiconductor switching elements to each other in a cascade manner, it is possible to reduce the amount of information communicated between each cell and the central controller.

BRIEF DESCRIPTION OF THE DRAWINGS

FIG. 1 is a circuit diagram illustrating an electric power conversion apparatus according to a first embodiment of the present invention.

FIG. 2 is a circuit diagram illustrating a cell used in the first embodiment of the present invention.

FIG. 3 is a circuit diagram illustrating an electric power conversion apparatus according to a second embodiment of the present invention.

FIG. 4 is a circuit diagram illustrating a cell used in a third embodiment of the present invention.

FIG. 5 is a circuit diagram illustrating a self-power supply used in a fourth embodiment of the present invention.

FIG. 6 is a circuit diagram illustrating a self-power supply used in a fifth embodiment of the present invention.

FIG. 7 is a circuit diagram illustrating a voltage adjustable circuit used in a sixth embodiment of the present invention.

BEST MODE FOR CARRYING OUT THE INVENTION

Embodiments of the present invention will now be described with reference to accompanying drawings.

[First Embodiment]

A first embodiment of the present invention is described below.

The first embodiment is configured so as to detect a failure in a DC capacitor, which is a part of a cell, even when a failure bit indicative of the failure in the DC capacitor is not transmitted to a central controller.

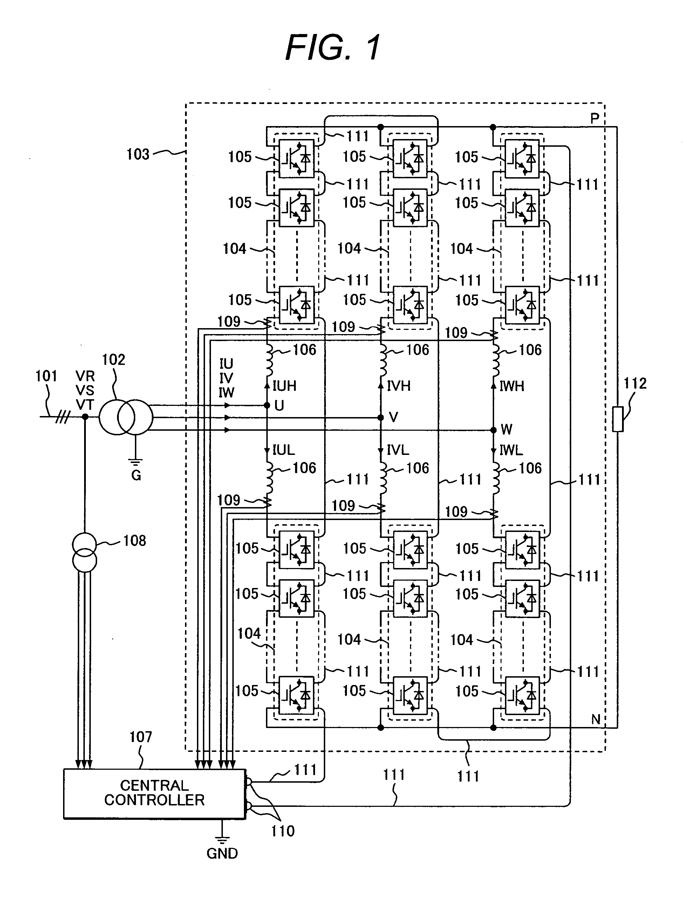

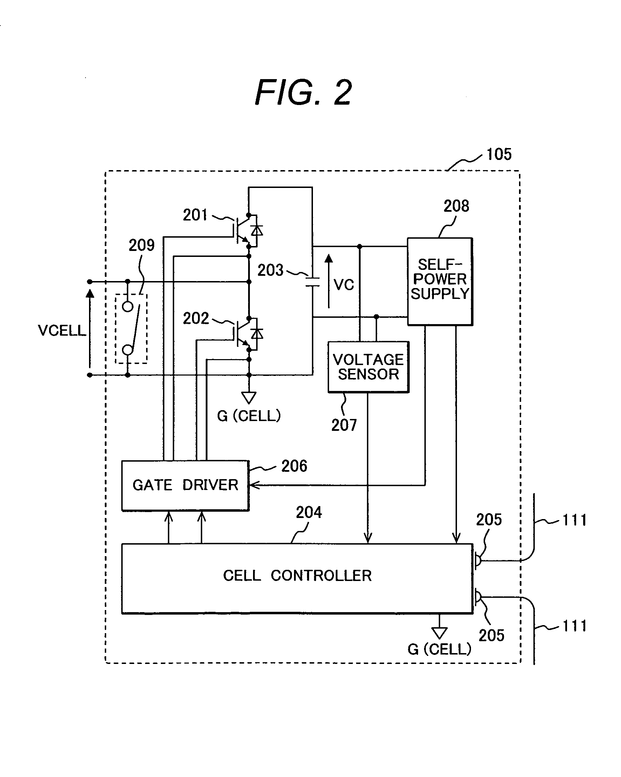

The configuration of the first embodiment will now be described with reference to FIGS. 1 and 2.

In the present embodiment, it is assumed that each cell 105 is a chopper cell. It should be noted, however, that the present invention is also applicable to a full-bridge cell.

Further, in the present embodiment, it is assumed that a three-phase MMC applied to a three-phase power system is used as an electric power conversion apparatus 103. However, the present invention is also applicable to a single-phase MMC applied to a single-phase system and to a motor-driving MMC.

Furthermore, the present invention is also applicable to a CMC (cascaded multilevel converter).

The electric power conversion apparatus 103 is connected to a three-phase power system 101 through a transformer 102.

U, V, W points of the electric power conversion apparatus 103 are connected to a secondary side of the transformer 102.

A load device 112 is connected between P and N points of the electric power conversion apparatus 103.

The electric power conversion apparatus 103 according to the present embodiment configured to perform giving and receiving of AC power with the three-phase power system.

Further, the electric power conversion apparatus 103 configured to perform giving and receiving of DC power with the load device 112. The load device 112 represents, for example, a DC load, a DC link for a motor drive inverter, and a DC power supply.

In the present embodiment, the phase voltages of the three-phase power system 101 are referred to as the VR, VS, and VT, respectively. Electrical currents of the three-phase, which flow at the secondary side of the transformer 102, are referred to as the IU, IV, and IW, respectively.

In the present embodiment, it is assumed that a neutral point of the secondary side of the transformer 102 (to which the electric power conversion apparatus 103 is connected) is grounded.

The electric power conversion apparatus 103 is formed by connecting a plurality of cells 105 to each other in a cascade manner.

Each cell 105 is a bidirectional chopper circuit (see FIG. 2) having a DC capacitor, which will be described later in detail. Each cell 105 is connected to an external circuit through at least two terminals and capable of regulating the voltage between the two terminals to a DC capacitor voltage or to zero.

In the present embodiment, the voltage between the two terminals is referred to as the cell's output voltage or as the cell voltage.

A circuit formed by interconnecting one or more cells 105 in a cascade manner as shown in FIG. 1, is referred to as a converter arm 104. In the present embodiment, it is assumed that one converter arm 104 includes N pieces of cells 105. Further, the electrical current flowing in each converter arm 104 is referred to as an arm current. As shown in FIG. 1, the arm currents are respectively defined as the IUH, IVH, IWH, IUL, IVL, and IWL.

The electric power conversion apparatus 103 is formed by connecting six converter arms 104 and six reactors 106 as shown in FIG. 1.

The central controller 107 provides overall control of the electric power conversion apparatus 103. The central controller 107 has a ground potential that is obtained when it is connected to a ground point marked "GND" in FIG. 1.

An AC voltage sensor 108 is to detect system phase voltages VR, VS, and VT and send their instantaneous value signals to the central controller 107.

A current sensor 109 is to detect arm currents IUH, IVH, IWH, IUL, IVL, and IWL and send their instantaneous value signals to the central controller 107.

The central controller 107 includes one or two optical transceivers 110. Each optical transceiver 110 communicates with a cell controller 204 of each cell through an optical fiber cable 111.

The central controller 107 detects system phase voltages VR, VS, and VT and arm currents IUH, IVH, IWH, IUL, IVL, and IWL, determines an output voltage command value to be given to each cell105 in accordance with such detected information, and sends the output voltage command value to each cell 105. The central controller 107 performs the above-mentioned series of operations at substantially fixed intervals, which are hereinafter referred to as the control intervals.

The central controller 107 performs the above-mentioned ees of operation to control arm currents IUH, IVH, IWH, IUL, IVL, and IWL, thereby giving and receiving of electrical power with the three-phase power system 101.

The central controller 107 sends the output voltage command value to the cell controller 204 of each cell through the optical transceiver 110 and the optical fiber cable 111.

Further, in the present embodiment, the cell controller 204 includes two optical transceivers 205 and communicates with the central controller 107 or a neighboring other cell controller 204 through the optical fiber cable 111.

Furthermore, each cell controller 204 in the present embodiment has a function of notifying the completion of communicate to the previous cell controller or the central controller upon completion of the communication with the next cell controller 204 or the central controller 107, and has a function of reporting a communication failure in a reverse direction if the communication with the next cell controller 204 or the central controller 107 cannot be completed.

Moreover, the cell controller 204 generates a gate pulse for switching elements 20, and 202 in accordance with the output voltage command value for its own local cell 105, which is sent from the central controller 107 or from a neighboring other cell controller 204 through the optical fiber cable 111, and the information as to the voltage VC of the DC capacitor 203 of its own cell.

In the present embodiment, when the number of cells is 6N, an optical serial signal frame sent from a 6Nth cell is returned to the central controller 107.

The configuration of each cell 105 will now be described with reference to FIG. 2.

A main circuit for each cell 105 is a bidirectional chopper circuit including a high-side switching element 201, a low-side switching element 202, and a DC capacitor 203. The voltage of the DC capacitor 203 is referred to as the VC. It should be noted that a battery or other DC voltage source may be used in place of the DC capacitor 203.

The high-side switching element 201 and the low-side switching element 202 are generically referred to as the switching elements.

In the present embodiment, an IGBT is used as the switching elements 201, 202. However, the present invention is applicable to a case where a gate turn-off thyristor (GTO), a gate commutated turn-off thyristor (GCT), a metal oxide semiconductor field effect transistor (MOSFET), or other on/off control element is used as the switching elements 201, 202.

Each cell 105 includes a cell controller 204 and a self-power supply 208. The cell controller 204 is connected to the cell controller 204 of a neighboring other cell 105 or the central controller 107 through the optical transceivers 205 and the optical fiber cable 111.

The present invention is characterized by including the self-power supply 208 to feed electrical power to the cell controller 204. The advantages of the self-power supply will be described later.

The cell controller 204 generates a gate pulse for driving the switching elements 201, 202, and sends the gate pulse to a gate driver 206.

The gate driver 206 applies an appropriate voltage between the gate and emitter of the switching elements 201, 202 to turn on or turn off the switching elements 201, 202.

A DC voltage sensor 207 detects the DC capacitor voltage VC and sends its instantaneous value signal to the cell controller 204.

Each cell controller 204 has the same potential as the emitter terminal of the low-side switching element 202 of each cell 204. In FIG. 2, this potential point is designated as a G (CELL) point.

Further, the cell controller 204 generates a gate pulse for the switching elements 201, 202 in accordance with the output voltage command value for its own cell 105, which is sent from the central controller 107 through the optical fiber cable 111, and the information as to the voltage VC of the DC capacitor 203 of its own cell.

The self-power supply 208 is connected with the DC capacitor 203 in parallel to feed electrical power to the cell controller 204. The self-power supply 208 may also feed electrical power to the gate driver 206. When the voltage VC becomes equal to or lower than a certain voltage (Vm), the self-power supply 208 stops its operation because it receives electrical power from the DC capacitor 203.

In the present embodiment, signals from the central controller are serially transmitted to each cell controller. Therefore, signal transmission delay time increases in proportion to an increase in the amount of information carried by the transmitted signals. If signal processing for all cells is not completed within one control interval, the electric power conversion apparatus 103 cannot be normally controlled. It is therefore extremely important that the amount of information carried by the signals be reduced.

A signal transmission delay will now be described in the present embodiment.

In the present embodiment, optical fiber cables since are connected to neighboring others in daisy-chain connection, delay time arises at each step that any cell controller 204 transmits a signal to a neighboring other cell controller 204.

Since all cells are connected to neighboring other cells through optical fiber cables in daisy-chain connection, a cell distant from the central controller 107 has an increasing signal transmission delay between daisy-chained cells. Therefore, the delay time in the transmission of a control signal from the central controller 107 to individual cells varies from one cell to another.

Therefore, it is important that the delay time, which varies from one cell to another due to a daisy chain connection, must be balanced.

Here, cell numbers are defined. The cell numbers represent information that is stored in the cell controller 204 of each cell 105.

The cell numbers is to indicate the order in which each cell 105 is daisy-chained through the optical fiber cables 111-114 for connection to the central controller 107. When the cell number of a cell 105 is K, the cell is referred to as the Kth cell. The Kth cell is a cell that receives information from the central controller 107 in the Kth place.

Delay balance time TB will now be described.

The delay balance time TB is the time for substantially equalizing the delay time in the signal transmission from the central controller 107 to each cell 15. The value of the delay balance time TB varies from one cell to another.

In the first embodiment, an optical serial signal transmitted from the central controller 107 travels through 6N cells and then returns to the central controller 107.

Therefore, the central controller 107 can measure time (total delay time) TD that is required for the optical serial signal to pass through the 6N cells.

When, for instance, the central controller 107 and each cell controller 204 are initialized, the central controller 107 can measure the total delay time TD by using a testing optical serial signal frame for delay time measurement and send the digital value of the total delay time TD to all cells by means of optical serial transmission.

This ensures that each cell 105 has information about the total delay time TD for all cells (6N cells). Further, each cell also has a cell number K that indicates what number cell its own is.

Assuming that the delay balance time for the Kth cell is TB (K), the delay time in the signal transmission from the central controller 107 to the individual cells 15 remains substantially the same when TB(K) is given by the following equation:

$$\texttt{TB(K) = (1 - K/6N) \cdot TD --- Equation 1}$$

Advantages of the present invention will now be described. The present invention is characterized in that that the central controller 107 can detect a failure by feeding electrical power to the cell controller 204 from the self-power supply 208 even when a DC capacitor abnormality signal is not provided. A detailed description is given below.

As an example, a method of detecting a failure when the DC capacitor voltage of one of the cells 105, namely, the Hth cell, is dropped, is described below.

When the DC capacitor voltage of the Hth cell drops below a predetermined voltage (Vm), the self-power supply 208 cannot feed electrical power to the cell controller 204.

As no electrical power is fed to the cell controller 104, the cell controller 104 cannot communicate with the central controller 107 or a neighboring other cell controller.

Therefore, the Hth cell controller cannot notify the H-1th cell controller or the central controller concerning the completion of communication because of not-yet completed communication. Hence, the H-1th cell controller transmits relevant information to the central controller 107 in a reverse direction through the other cell controllers to notify that the Hth cell controller could not establish communication.

As the central controller 107 detects that it could not communicate with the Hth cell controller, the central controller 107 can judge that the DC capacitor of the Hth cell controller is in abnormal state.

Therefore, there is no need for the central controller to constantly monitor the status of DC voltage by means of communication. Thus, a communication bit can be effectively used.

Further, in the present embodiment, when the central controller 107 has two optical transceivers, the central controller 107 can communicate with the cells in a reverse order, that is, sequentially communicates with the 6Nth to first cells in the order named instead of sequentially communicating with the first to 6Nth cells in the order named. Therefore, even when one cell is stopped, it is possible to perform an uninterrupted operation by making use of redundancy in terms of the number of cells.

A method of performing an uninterrupted operation when one cell is stopped, which is used in the present embodiment, will now be described.

If one cell is stopped, the communication to the other cells can be established as far as bidirectional communication is provided (as far as the communication from the first to 6Nth cells and the communication from the 6Nth to first cells are provided).

However, the delay balance time TB provided in a situation where all cells are running, differs from the delay balance time TB provided in a situation where one cell is stopped.

Therefore, for example, when the stop of the Hth cell is detected, the central controller sets the delay balance time for each cell again.

For example, on condition that the delay balance time in a situation where all cells are running is set to TB, even if the Hth cell is stopped, the delay time in the signal transmission from the central controller 107 to each cell 105 can equalize substantially by setting the delay balance time TB1 (K) for the Kth cell (the H-1th cell from the first cell) in a normal direction-communication to a value obtained by the following Equation 2.

$$\text{TB1(K)} = \{2(H - 1) - K\} \cdot TD/6N \text{ --- Equation 2}$$

Further, the delay time in the signal transmission from the central controller 107 to each cell 105 can equalize substantially by setting the delay balance time TB2 (K) for the Kth cell (the 6Nth cell from the H+1th cell) in a reverse direction-communication to a value obtained by the following Equation 3.

$$\text{TB2(K)} = \{18N - 2(H + 1) - K\} \cdot TD/6N \text{ --- Equation 3}$$

In addition, a short circuiting switch 209 is connected with the output of each cell in parallel to allow the self-power supply 208 to feed driving electrical power for the short circuiting switch.

The short circuiting switch 209 is to make a short-circuit in the output of the cell 105 when the cell 105 is faulty. The short circuiting switch 209 is a normally-on switch that make a short-circuit in the output of the cell 105 when the driving electrical power is not fed from the self-power supply 208.

When the self-power supply 208 comes to a stop, the short circuiting switch 209 makes a short-circuit in the output of an abnormal cell. Therefore, when redundancy is provided in terms of the number of cells, the operation of the electric power conversion system can be performed continuously even in the event of a cell failure.

Further, in the present embodiment, the main circuit of each cell can feed electrical power for the cell controller 204 and for the gate driver 206. Therefore, there is no need to provide insulation against a ground potential with an insulating transformer or the like. Hence, the present embodiment makes it possible to reduce the size and weight of each cell. This advantage does not depend on whether the employed configuration includes the aforementioned failure bit.

[Second Embodiment]

A second embodiment of the present invention will now be described. In the first embodiment, the communication between the central controller and the cell controllers is established by a daisy-chain connection. In the second embodiment, however, the central controller communicates with each cell controller on an individual basis, that is, by a star connection method.

Described below is of only the differences between the configuration of the second embodiment and the configuration of the first embodiment are.

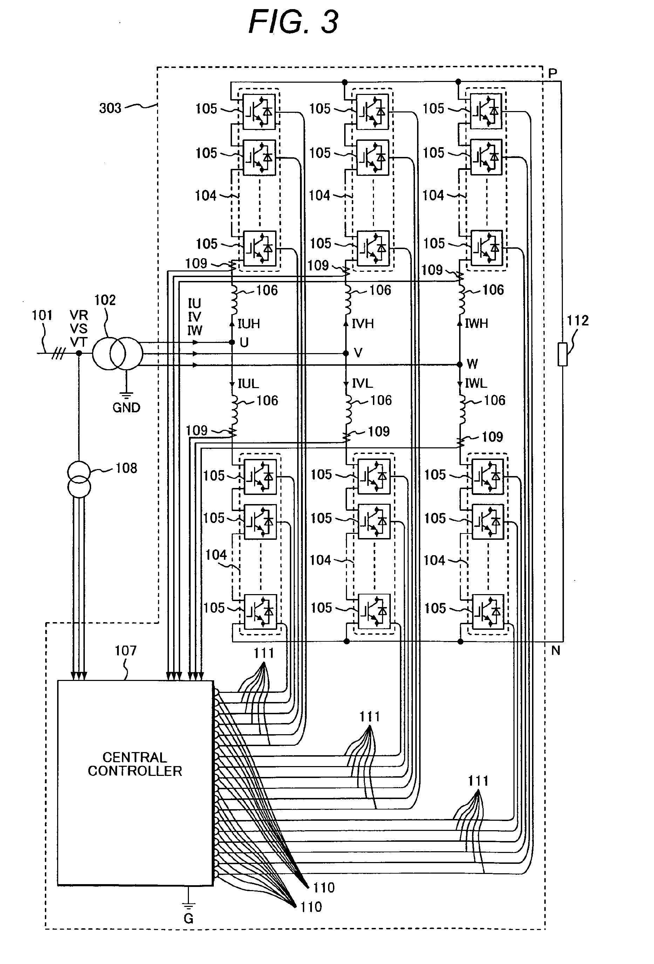

FIG. 3 is a circuit diagram illustrating the second embodiment of the present invention.

The central controller 107 includes 6N optical transceivers 110 and sends an output voltage command value to each cell 105 through each optical transceiver and the optical fiber cable 111.

In the present embodiment, signals are parallelly sent from the central controller 107 to the cell controller 204 of each cell. Therefore, the number of required optical transceivers is increased. When the present invention is applied to an electric power conversion apparatus 303 according to the present embodiment, the amount of information carried by the signals can be reduced. This makes it possible to use inexpensive optical transceivers having a low signal processing capability. Hence, the cost of the apparatus can be reduced.

Advantages of the present embodiment will now be described. In the present embodiment, too, the self-power supply 208 is used to feed electrical power to the cell controller 204. Therefore, a failure in the cell's DC capacitor can be detected even if the associated signal is not provided for the central controller. A detailed description is given below.

As an example, a case where the DC capacitor voltage VC of one of the cells 105 is lowered will now be described (a cell 105 whose DC capacitor voltage is lowered is hereinafter referred to as an abnormal cell).

When the DC capacitor voltage VC of an abnormal cell drops below the Vm, the self-power supply 208 comes to a stop so that no electrical power can be fed to the cell controller 204.

Thereby, the cell controller 204 becomes unable to communicate with the central controller 107 because no electrical power is supplied to the cell controller 204.

Therefore, when the central controller 107 becomes unable to communicate with the abnormal cell, the central controller 107 can judge that the DC capacitor of the abnormal cell becomes abnormal.

The central controller 107 does not need to establish communication in order to constantly monitor for a DC capacitor abnormality. Thus, the communication bit can be effectively used.

Further, the short circuiting switch 209 is connected with the output of each cell in parallel to allow the self-power supply 208 to feed the electrical power for driving the short circuiting switch. Thereby, if any one cell is stopped in this instance, no driving electrical power is fed from the self-power supply 208, so that the output of the cell 105 is short-circuited. This ensures that the electric power conversion system can operate continuously even when one cell is faulty.

In the present embodiment, it is assumed that each cell 105 is a chopper cell. It should be noted, however, that the present invention is also applicable to a full-bridge cell as each cell.

Further, in the present embodiment, it is assumed that a three-phase MMC connected to a three-phase power system is used as the electric power conversion apparatus 103. However, the present invention is also applicable to a single-phase MMC as the electric power conversion apparatus connected to a single-phase system and to a motor-driving MMC.

Furthermore, the present invention is also applicable to a CMC (cascaded multilevel converter).

Moreover, in the present embodiment, the main circuit since can feed electrical power for the cell controller 204 and the gate driver 206, there is no need to provide insulation against a ground potential with an insulating transformer or the like. Hence, the present embodiment makes it possible to reduce the size and weight of each cell. This effect does not depend on whether the employed configuration includes the aforementioned failure bit.


[Third Embodiment]


A third embodiment of the present invention will now be described. In the first embodiment, the electrical power for driving the cell controller is fed from the DC capacitor of each cell through the self-power supply. In the third embodiment, however, the electrical power is derived from the voltage to be applied to a switching element and fed through a self-power supply.

Described below is of only the differences between the configuration of the third embodiment and the configuration of the first embodiment.

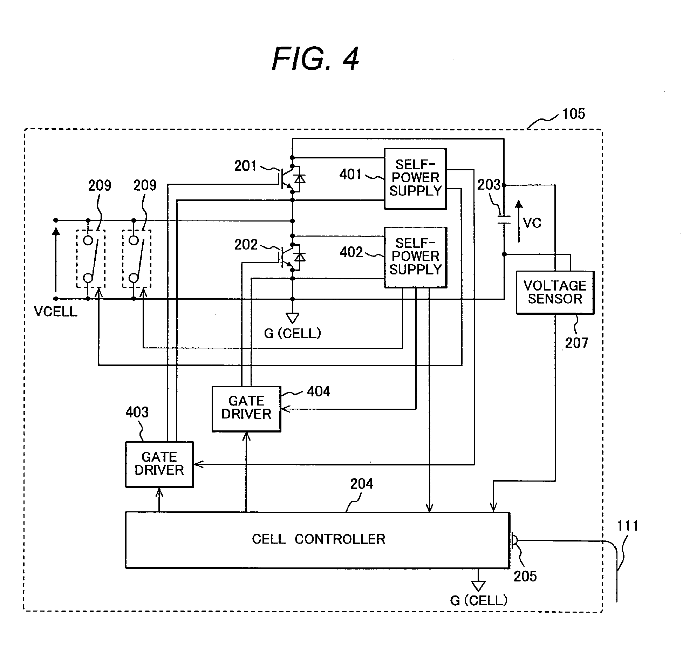

FIG. 4 is a circuit diagram illustrating the third embodiment of the present invention.

A voltage of VC/2 is applied to both of the high-side switching element 201 and the low-side switching element 202 when they are both OFF. However, when one of these switching elements is ON, a voltage of VC and a pulsed voltage of approximately zero are applied to these switching elements.

A self-power supply 401 feeds electrical power by using the voltage to be applied to the high-side switching element 201. A self-power supply 402 feeds electrical power by using the voltage to be applied to the low-side switching element 202.

The self-power supply 401 feeds electrical power to a gate driver 403 that drives the high-side switching element 201.

The self-power supply 402 feeds electrical power to a gate driver 404 that drives the low-side switching element 202, to the cell controller 204, and to the short circuiting switch 209.

In the present embodiment, too, electrical power is fed from the self-power supplies to the cell controller, which is a feature of the present invention. Hence, a switching element abnormality in each cell can be detected without performing a constant monitoring operation by means of communication. This abnormality detection scheme will now be described.

A case where the low-side switching element 202 in a cell 105 is faulty due to short-circuiting is described below (a cell whose switching element is faulty is hereinafter referred to as a faulty cell).

If the low-side switching element 202 of a faulty cell becomes faulty due to short-circuiting, no voltage is applied to the low-side switching element. Hence, the self-power supply 402 comes to a stop and cannot feed electrical power to the cell controller 204.

The cell controller 204 becomes unable to communicate with the central controller 107 because no electrical power is fed to the cell controller 204.

When the central controller 107 becomes unable to communicate with the faulty cell, the central controller judges that its low-side switching element becomes faulty.

Further, in a situation where the electrical power for the cell controller 204 is fed from the self-power supply 401, which feeds electrical power by using the voltage to be applied to the high-side switching element 201, if the high-side switching element becomes faulty due to short-circuiting, the self-power supply 401 stops and does not feed electrical power to the cell controller 204. This makes it impossible for the cell controller 204 to communicate with the central controller 107. When such communication cannot be established, the central controller 107 can judge that the high-side switching element is faulty in the faulty cell.

As described above, the central controller 107 does not need to constantly monotor for an abnormality in the high-side switching element 201 or low-side switching element 202 by means of communication. Therefore, the communication bit can be effectively used.

Further, the electric power conversion apparatus according to the present embodiment can continuously operate even in the event of a cell failure, by connecting the short circuiting switch 209 with the output of a cell in parallel and feeding electrical power for driving the short circuiting switch from the self-power supply 401 or self-power supply 402.

The short circuiting switch 209 is to make a short-circuit in the output of the cell 105 when the cell 105 becomes faulty. The short circuiting switch 209 is a normally-on switch that makes a short-circuit in the output of the cell 105 when the driving electrical power is not fed from the self-power supply 401 or the self-power supply 402.

When the self-power supply 401 or the self-power supply 402 comes to a stop, the short circuiting switch 209 makes a short-circuits in the output of an abnormal cell. Therefore, when redundancy can be provided in terms of the number of cells, the electric power conversion apparatus can operate continuously in the event of a cell failure.

In the present embodiment, it is assumed that each cell 105 is a chopper cell. It should be noted, however, that the present invention is also applicable to a full-bridge cell.

Further, in the present embodiment, it is assumed that a three-phase MMC connected to a three-phase power system is used as the electric power conversion apparatus 103. However, the present invention is also applicable to a single-phase MMC connected to a single-phase system and to a motor-driving MMC.

Furthermore, the present invention is also applicable to a CMC (cascaded multilevel converter). Moreover, in the present embodiment, the main circuit can feed electrical power for the cell controller 204 and for the gate driver 403 or the gate drover 404. This eliminates the necessity of providing insulation against a ground potential with an insulating transformer or the like. Hence, the present embodiment makes it possible to reduce the size and weight of each cell. This effect does not depend on whether the employed configuration includes the aforementioned failure bit.

[Fourth Embodiment]

A fourth embodiment of the present invention will now be described. The fourth embodiment is an example of the self-power supply used in the first, second, or third embodiment.

When the fourth embodiment is applied to the first, second, or third embodiment, abnormality detection can be accomplished even if the information about an abnormality in the DC capacitor, which is a part of the cell, or a switching element failure bit is not transmitted to the central controller.

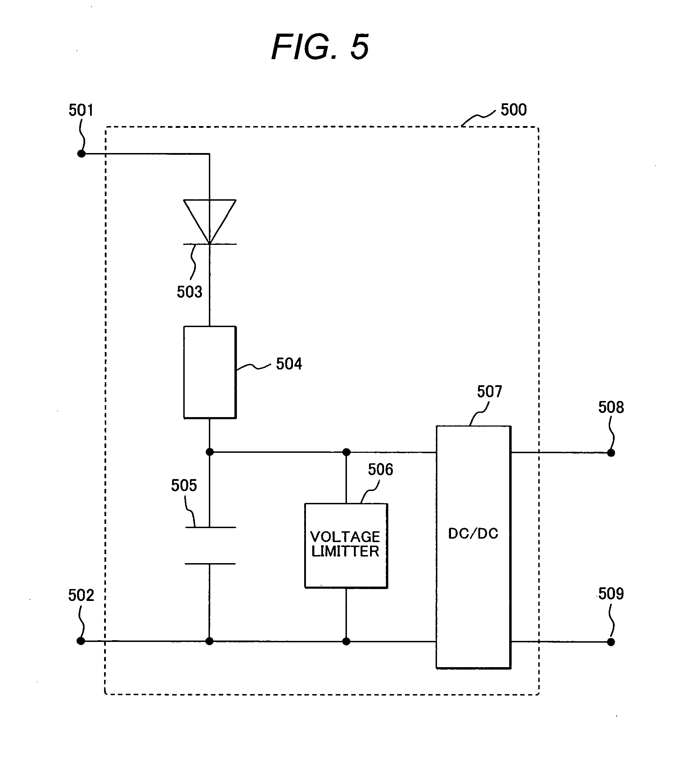

FIG. 5 is a circuit diagram illustrating the fourth embodiment of the present invention.

First of all, the configuration of a self-power supply 500 will be described on the assumption that the main circuit can feed electrical power for the cell controller, which is characteristic of the present invention. The self-power supply 500 is configured so that a series circuit formed by a discharge prevention diode 503, a limiting resistor 504, and a feed capacitor 505 is connected between input terminals 501 and 502. A voltage limiter 506A such as a zener diode and a voltage adjustable circuit 507 are connected in parallel with the feed capacitor. The output of the voltage adjustable circuit 507 is connected to output terminals 508, 509.

Operations of the self-power supply 500 will now be described.

ADC voltage or pulsed voltage of several hundred to several thousand volts, which depends on an employed configuration and intended use, is applied to the input terminals 501, 502 to charge the feed capacitor 505. The discharge prevention diode 503 prevents the feed capacitor 505 from being discharged. However, if an input voltage is considered to be substantially fixed so as to be constant as the first or second embodiment, the discharge prevention diode 503 may be excluded.

When the voltage VCQ of the feed capacitor 505 increases to a predetermined voltage Vlim or higher voltage, the voltage limiter 506 operates to maintain the voltage of the feed capacitor 505 substantially constant. When the voltagelimiter 506 operates to maintain the voltage VCQ of the feed capacitor substantially constant, the voltage adjustable circuit 507 operates. The voltage adjustable circuit 507 converts the voltage VCQ of the feed capacitor 505 to a voltage required for the load and outputs the resulting voltage to the output terminals 508, 509.

When the voltage Vin applied to the input terminals 501, 502 becomes equal to or lower than the voltage Vlim, the self-power supply 500 according to the present invention operates so that the voltage VCQ of the feed capacitor 505 does not remain constant. This causes the voltage adjustable circuit 507 to stop its operation. Hence, no voltage is output to the output terminals 508, 509.

As no electrical power is fed to the cell controller 204 according to the first, second, or third embodiment, the cell controller lapses into communication impossibility with the central controller 107.

When the central controller 107 judges that the communication impossibility occurs, it judges that the DC capacitor 203, the high-side switching element 201, or the low-side switching element 202 is abnormal.

As described above, the central controller 107 does not need to constantly monitor for an abnormality in the DC capacitor 203, switching element 201, or switching element 202 by means of communication. This makes it possible to effectively use the communication bit.

Further, in the present embodiment, the main circuit can feed electrical power for the cell controller and for the gate driver. This eliminates the necessity of providing insulation against a ground potential with an insulating transformer or the like. Hence, the present embodiment makes it possible to reduce the size and weight of each cell. This effect does not depend on whether the employed configuration includes the aforementioned failure bit.

Fifth Embodiment

A fifth embodiment of the present invention will now be described. The fifth embodiment is an example of the self-power supply used in the first or second embodiment.

When the fifth embodiment is applied to the first or second embodiment, abnormality detection can be accomplished even if the failure bit of the DC capacitor, which is a part of the cell, is not sent to the central controller.

Further, the fifth embodiment does not suffer the loss caused by the limiting resistor used in the fourth embodiment. Therefore, the fifth embodiment makes it possible to feed electrical power at a low loss.

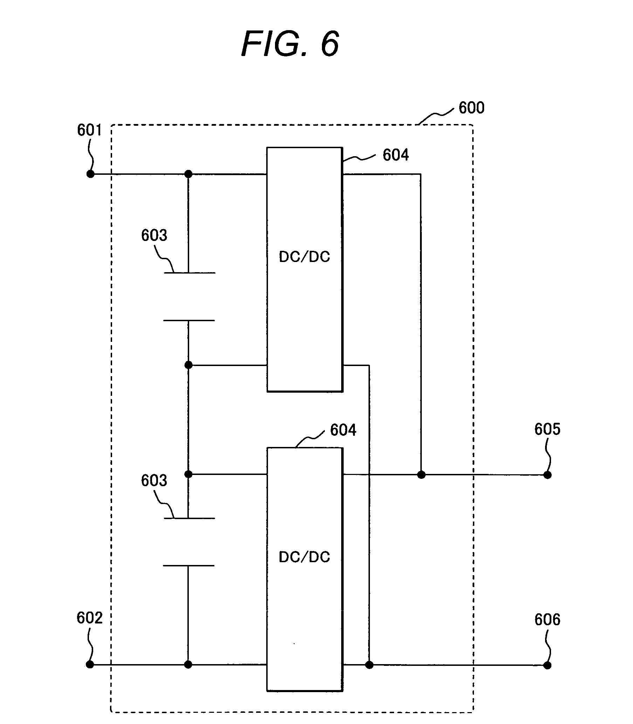

FIG. 6 is a circuit diagram illustrating the fifth embodiment of the present invention.

Further, the embodiment is characterized in that, in the self-power supply capable of feeding electrical power from the main circuit to the cell controller, which is a feature of the present invention, outputs of voltage adjustable circuits constituting the self-power supply are connected to each other in parallel to balance the outputs of the voltage adjustable circuits. As a result, the voltage balance of voltage-dividing feed capacitors can be maintained constant. This eliminates the necessity of using the limiting resistor that is required in the fourth embodiment.

First of all, the configuration of the self-power supply 600 will be described. The self-power supply 600 is configured so that a series capacitor having a plurality of voltage-dividing feed capacitors 603 is connected between input terminals 601, 602. A voltage adjustable circuit 604 is connected to each of the voltage-dividing feed capacitors 603. The outputs of the voltage adjustable circuits 604 are connected in parallel and connected to output terminals 508, 509.

Operations of the self-power supply 600 will now be described.

A voltage Vin applied to the input terminals 601, 602 is divided by the voltage-dividing feed capacitors 603. The voltage adjustable circuits 604 convert the voltages of the voltage-dividing feed capacitors 603 to voltages required for loads such as the gate driver and cell controller. The outputs of the voltage adjustable circuits are connected in parallel to feed electrical power from the output terminals 605, 606. It should be noted, however, that the voltage adjustable circuits 604 have a function of stopping their output when the input voltage therein becomes equal to or lower than a predetermined voltage (Vmin).

As the outputs of the voltage adjustable circuits 604 are connected in parallel, they are substantially equal. Hence, the voltages of the voltage-dividing feed capacitors 603 are substantially equal.

Further, although it is not shown in FIG. 6, the voltages of the voltage-dividing feed capacitors 603 can be balanced by detecting the voltages of the voltage-dividing feed capacitors 603 and adjusting the outputs of the voltage adjustable circuits 604.

When the voltage applied to the input terminals 601, 602 drops so that the voltage of each voltage-dividing feed capacitor becomes equal to or lower than the predetermined voltage Vmin, the voltage adjustable circuits 604 stop its operation. As a result, no electrical power is fed via the output terminals 605, 606.

Consequently, no electrical power is fed to the cell controller 204 according to the first and second embodiments. Hence, the cell controller lapses the communication impossibility with the central controller 107.

When the central controller 107 recognizes the communication impossibility, it judges that the DC capacitor 203 is abnormal.

As described above, the central controller 107 does not need to constantly monitor for an abnormality in the DC capacitor 203 by means of communication. This makes it possible to effectively use the communication bit.

Further, in the present embodiment, the main circuit can feed electrical power for the cell controller and the gate driver. This eliminates the necessity of providing insulation against a ground potential with an insulating transformer or the like. Hence, the present embodiment makes it possible to reduce the size and weight of each cell. This effect does not depend on whether the employed configuration includes the aforementioned failure bit.

Sixth Embodiment

A sixth embodiment of the present invention will now be described. The sixth embodiment is a modification of the voltage adjustable circuit used in the fourth or fifth embodiment.

By applying the sixth embodiment to the fourth or fifth embodiment, it is possible to reduce the possibility of the gate driver outputting an erroneous pulse when the voltage adjustable circuit comes to a stop.

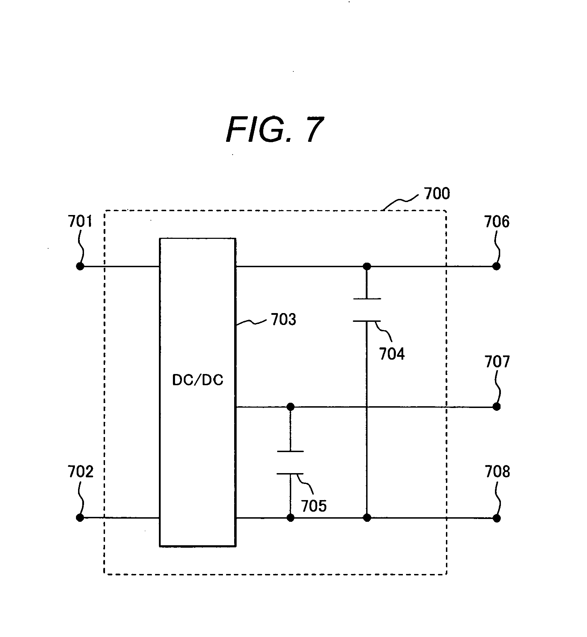

FIG. 7 is a circuit diagram illustrating the sixth embodiment of the present invention.

Further, the embodiment is characterized in that, in the cell including the self-power supply capable of feeding electrical power from the main circuit to the cell controller, it is configured to determine a capacitance of each backup capacitor connected to each output of the voltage adjustable circuit so that the gate driver stops earlier than the cell controller.

First of all, the configuration of the present embodiment will be described. A backup capacitor 704 is connected to a voltage adjustable circuit 703 in parallel between output terminals 706, 708, which feeds electrical power from a voltage adjustable circuit 703 to the gate driver. A backup capacitor 705 is connected to a voltage adjustable circuit in parallel between output terminals 707, 708, which feeds electrical power from the voltage adjustable circuit 703 to the cell controller.

Next, operations of the present embodiment will be described. The voltage adjustable circuit 703 converts a voltage applied to input terminals 701, 702 to a voltage required for the gate driver and cell controller, and then feeds electrical power to the gate driver through the output terminals 706, 708 and to the cell controller through the output terminals 707, 708. By selecting the following capacitances for the backup capacitors 704, 705, it is possible to ensure that the gate driver stops earlier than the cell controller when the voltage adjustable circuit 703 comes to a stop. This makes it possible to prevent the switching element from erroneously firing even when an erroneous pulse is output when the cell controller stops.

When the voltage to be output to the gate driver is VGD, the electrical power to be consumed by the gate driver is PGD, the voltage to be output to the cell controller is VCC, and the electrical power to be consumed by the cell controller is PCC, the capacitances CGD, CCC of the backup capacitors 704, 705 should satisfy the relationship indicated in Equation 5. When the relationship indicated in Equation 5 is satisfied, the voltage of the backup capacitor 704 drops earlier than the voltage of the backup capacitor 705.

$$\text{CGD} < [\{\text{PGD} \cdot (\text{VCC})^2\}/\text{PCC} \cdot (\text{VGD})^2] \cdot \text{CCC} \quad \text{---} \quad \text{Equation 5}$$

By setting the capacitance of each backup capacitor as described above, the gate driver can stop earlier than the cell controller when the voltage adjustable circuit 703 comes to a stop. This makes it possible to prevent the switching element from erroneously firing.

INDUSTRIAL APPLICABILITY

The present invention can be applied to equipment that uses an electric power converter such as a reactive power compensator (SVC or STATCOM) for converting AC power to DC power at one point, a motor drive electric power converter, and a high voltage direct current (HVDC) transmission system.

DESCRIPTION OF REFERENCE NUMERALS

101... Three-phase power system
102... Transformer
103, 303... Electric power conversion apparatus
104... Converter arm
105... Cell (unitary converter)
106... Reactor
107... Central controller

108... AC voltage sensor
109... Current sensor
110, 205... Optical transceiver
111... Optical fiber cable
112... Load device
201... High-side switching element
202... Low-side switching element
203... DC capacitor
204... Cell controller
206, 403, 404... Gate driver
207... DC voltage sensor
208, 401, 402, 500, 600... Self-power supply
209... Short circuiting switch
501, 502, 601, 602, 701, 702... Input terminal
503... Discharge prevention diode
504... Limiting resistor
505... Feed capacitor
506... Voltage limiter
507, 604, 703... Voltage adjustable circuit
508, 509, 605, 706, 707, 708... Output terminal
603... Voltage-dividing feed capacitor
704, 705... Backup capacitor

**Claims**

1. An electric power conversion apparatus having a plurality of cells connected to each other in a cascade manner, comprising a self-power supply configured to feed each of the cells with electrical power from each cell's own main circuit.

2. The electric power conversion apparatus according to claim 1, further comprising a central controller and cell controllers each which controls of each of the cells, wherein each of cell controllers is configured to be fed with electrical power from the self-power supply.

3. The electric power conversion apparatus according to claim 1 or 2,
wherein each of the cells includes the main circuit configured by a switching element and a DC capacitor, a DC voltage sensor configured to detect a voltage of the DC capacitor, and a gate driver configured to receive a signal from the central controller, receive a gate pulse from each cell controller that generates the gate pulse for the switching element to turn on and off the switching element, and
wherein the self-power supply may be configured to feed electrical power to each of the cell controllers and the gate driver.

4. The electric power conversion apparatus according to any one of claims 1 to 3, wherein the central controller and the cell controllers are connected to each other through optical fiber cables in a daisy chain connection.

5. The electric power conversion apparatus according to any one of claims 1 to 3,
wherein the central controller and the cell controllers are connected to each other through optical fiber cables in star connection.

6. The electric power conversion apparatus according to any one of claims 1 to 5,
wherein the main circuit in each of the cells includes a switching element and a DC capacitor, wherein the central controller and each cell controller communicate to each other by using a signal for judging whether a failure occurs in the DC capacitor or in the switching element of each of the cells.

7. The electric power conversion apparatus according to any one of claims 1 to 6, wherein the central control is configured to judge that the DC capacitor or switching element in the associated cell is faulty on condition that the central controller is unable to communicate with any of the cell controllers.

8. The electric power conversion apparatus according to any one of claims 1 to 7, wherein the self-power supply feeds the electrical power from the DC capacitor.

9. The electric power conversion apparatus according to any one of claims 1 to 7, wherein the self-power supply feeds the electrical power by using a voltage applied to the switching element.

10. The electric power conversion apparatus according to any one of claims 1 to 8, wherein the self-power supply includes a series capacitor circuit, which is formed by a plurality of voltage-dividing feed capacitors, and voltage adjustable circuits for adjusting the voltages of the voltage-dividing feed capacitors respectively, wherein outputs of the voltage adjustable circuits are connected to each other in parallel.

11. The electric power conversion apparatus according to claim 10, wherein each of the voltage adjustable circuits may have a function of detecting a voltage of each of the voltage-dividing feed capacitors to adjust the output of each voltage adjustable circuit.

12. The electric power conversion apparatus according to any one of claims 1 to 9, wherein the self-power supply includes a feed capacitor for charging electrical power, a discharge prevention diode for preventing a discharge of the feed capacitor, a limiting resistor for limiting an electrical current flowing into the self-power supply from the main circuit, a voltage limiter for maintaining the voltage of the feed capacitor constant, and a voltage adjustable circuit for adjusting the voltage of the feed capacitor.

13. The electric power conversion apparatus according to any one of claims 1 to 12, wherein the voltage adjustable circuit includes a plurality of output terminals with which a plurality of-backup capacitors are connected in parallel, respectively, wherein the backup capacitors have discharge time constants different from each other.

14. The electric power conversion apparatus according to any one of claims 1 to 14, wherein the output terminal of each of the cells is connected to a normally-on short circuiting switch, wherein driving electrical power for the short circuiting switch is fed from the self-power supply.

15. The electric power conversion apparatus according to claim 4, wherein the central controller is configured to identify a faulty cell when any one of the cells is faulty, and transmit a signal to cells other than the faulty cell to balance the transmission delay time of communication between the cell controller of each cell and the central controller.

**Amended claims under Art. 19.1 PCT**

1. An electric power conversion apparatus having a plurality of cells connected to each other in a cascade manner, comprising a self-power supply configured to feed each of the cells with electrical power from each cell's own main circuit, a central controller, and cell controllers each which controls of each of the cells, wherein each of cell controllers is configured to be fed with electrical power from the self-power supply.

2. Cancelled

3. The electric power conversion apparatus according to claim 1 or 2,
wherein each of the cells includes the main circuit configured by a switching element and a DC capacitor, a DC voltage sensor configured to detect a voltage of the DC capacitor, and a gate driver configured to receive a signal from the central controller, receive a gate pulse from each cell controller that generates the gate pulse for the switching element to turn on and off the switching element, and
wherein the self-power supply may be configured to feed electrical power to each of the cell controllers and the gate driver.

4. The electric power conversion apparatus according to any one of claims 1 to 3, wherein the central controller and the cell controllers are connected to each other through optical fiber cables in a daisy chain connection.

5. The electric power conversion apparatus according to any one of claims 1 to 3,
wherein the central controller and the cell controllers are connected to each other through optical fiber cables in star connection.

**6.** The electric power conversion apparatus according to any one of claims 1 to 5, wherein the main circuit in each of the cells includes a switching element and a DC capacitor, wherein the central controller and each cell controller communicate to each other by using a signal for judging whether a failure occurs in the DC capacitor or in the switching element of each of the cells.

**7.** The electric power conversion apparatus according to any one of claims 1 to 6, wherein the central control is configured to judge that the DC capacitor or switching element in the associated cell is faulty on condition that the central controller is unable to communicate with any of the cell controllers.

**8.** The electric power conversion apparatus according to any one of claims 1 to 7, wherein the self-power supply feeds the electrical power from the DC capacitor.

**9.** The electric power conversion apparatus according to any one of claims 1 to 7, wherein the self-power supply feeds the electrical power by using a voltage applied to the switching element.

**10.** The electric power conversion apparatus according to any one of claims 1 to 8, wherein the self-power supply includes a series capacitor circuit, which is formed by a plurality of voltage-dividing feed capacitors, and voltage adjustable circuits for adjusting the voltages of the voltage-dividing feed capacitors respectively, wherein outputs of the voltage adjustable circuits are connected to each other in parallel.

**11.** The electric power conversion apparatus according to claim 10, wherein each of the voltage adjustable circuits may have a function of detecting a voltage of each of the voltage-dividing feed capacitors to adjust the output of each voltage adjustable circuit.

**12.** The electric power conversion apparatus according to any one of claims 1 to 9, wherein the self-power supply includes a feed capacitor for charging electrical power, a discharge prevention diode for preventing a discharge of the feed capacitor, a limiting resistor for limiting an electrical current flowing into the self-power supply from the main circuit, a voltage limiter for maintaining the voltage of the feed capacitor constant, and a voltage adjustable circuit for adjusting the voltage of the feed capacitor.

**13.** The electric power conversion apparatus according to any one of claims 1 to 12, wherein the voltage adjustable circuit includes a plurality of output terminals with which a plurality of backup capacitors are connected in parallel, respectively, wherein the backup capacitors have discharge time constants different from each other.

**14.** The electric power conversion apparatus according to any one of claims 1 to 14, wherein the output terminal of each of the cells is connected to a normally-on short circuiting switch, wherein driving electrical power for the short circuiting switch is fed from the self-power supply.

**15.** The electric power conversion apparatus according to claim4, wherein the central controller is configured to identify a faulty cell when any one of the cells is faulty, and transmit a signal to cells other than the faulty cell to balance the transmission delay time of communication between the cell controller of each cell and the central controller.

# FIG. 1

# FIG. 2

## FIG. 3

## FIG. 4

# FIG. 5

# FIG. 6

# FIG. 7

<table>
<tr><td colspan="2" align="center">**INTERNATIONAL SEARCH REPORT**</td><td colspan="2">International application No.<br>PCT/JP2011/052771</td></tr>
</table>

A.   CLASSIFICATION OF SUBJECT MATTER
*H02M1/08*(2006.01)i

According to International Patent Classification (IPC) or to both national classification and IPC

B.   FIELDS SEARCHED

Minimum documentation searched (classification system followed by classification symbols)
H02M1/08

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y<br>A | Makoto HAGIWARA, "PWM Control and Experiment of Modular Multilevel Converters", The Transactions of the Institute of Electrical Engineers of Japan, vol.128, no.7, The Institute of Electrical Engineers of Japan, 2008.07, pages 957 to 965 | 1,8,9<br>2-7,10-15 |
| Y<br>A | JP 2009-159184 A  (Hitachi, Ltd.),<br>16 July 2009 (16.07.2009),<br>paragraphs [0040], [0090]; fig. 1<br>& US 2009/0168471 A1     & DE 102008055052 A1 | 1,8,9<br>2-7,10-15 |
| Y<br>A | JP 11-122952 A  (Fuji Electric Co., Ltd.),<br>30 April 1999 (30.04.1999),<br>paragraphs [0011] to [0012]; fig. 1<br>(Family: none) | 8,9<br>2-7,10-15 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 May, 2011 (06.05.11) | Date of mailing of the international search report<br>17 May, 2011 (17.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

EP 2 549 634 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAKOTO HAGIWARA ; HIROFUMI AKAGI.** PWM Control and Experiment of Modular Multilevel Converters. *IEEJ Transactions on Industry Applications,* vol. 128 (7), 957-965